# EUROPEAN PATENT SPECIFICATION

(11) **EP 4 157 731 B1**
(45) Date of publication and mention of the grant of the patent: **09.12.2026**
(21) Application number: 21818625.2
(22) Date of filing: 13.04.2021
(51) Int. Cl.: B65B 67/12, B07C 3/08, B07C 5/36

(54) **BAGGING DEVICE AND SORTING SYSTEM FOR SORTING PACKAGES**
ABSACKVORRICHTUNG UND SORTIERANLAGE ZUM SORTIEREN VON PAKETEN
DISPOSITIF D'ENSACHAGE ET SYSTÈME DE TRI POUR TRIER DES EMBALLAGES

(30) Priority: 02.06.2020 US 202063033376 P
(43) Date of publication of application: 05.04.2023
(73) Proprietor: Laitram, L.L.C., Harahan, LA 70123 (US)
(72) Inventor: FOURNEY, Matthew L., Laurel, Maryland 20723 (US); RAGAN, Bryant G., Metairie, Louisiana 70001 (US); COSTANZO, Mark, New Orleans, Louisiana 70115 (US); BAILEY, Destin Jacob, Marrero, Louisiana 70072 (US); BRUPBACHER, Christopher Alan, New Orleans, Louisiana 70130 (US)
(74) Representative: Forresters IP LLP
(86) International application number: PCT/US2021/026997
(87) International publication number: WO 2021/247146

(56) References cited:
- DE-A1- 3 228 273
- JP-A- H07 329 940
- US-A- 5 380 081
- US-A1- 2005 061 930
- US-A1- 2011 108 499
- US-A1- 2019 300 294
- US-B1- 8 919 529

## Description

### BACKGROUND

The invention relates generally to power-driven conveyors and more particularly to sorting conveyors sorting packages into multiple bags at multiple discharges.

In various industries such as in package- and parcel-handling, sorting conveyors are used to sort packages to assigned destinations, such as bags. Often the packages are discharged from a main sorting conveyor onto chutes leading to an assigned destination bag. If many sorting destinations are required, the main sorting conveyor can be long and occupy significant floor space.

Document US-A-5,380,081 discloses a bagging device according to the preamble of claim 1.

### SUMMARY

In a first aspect of the present invention there is provided a bagging device as set forth in the claims.

In a second aspect of the present invention there is provided a sorting system for sorting packages as set forth in the claims.

### BRIEF DESCRIPTION OF THE DRAWINGS

FIG. 1 is an isometric view of one version of a sorting conveyor embodying features of the invention in a bagging device for sorting packages selectively from a chute to assigned destination bags.
FIGS. 2A and 2B are side elevation views of the bagging device of FIG. 1 shown in two sorting positions.
FIGS. 3A-3E are isometric views depicting the sequence of steps taken to remove filled bags from the bagging device of FIG. 1.
FIG. 4 is an isometric view of a latching mechanism used to connect and disconnect slide tracks in the bagging device of FIG. 1 so that filled bags can be removed and replaced by empty bags.
FIG. 5 is an enlarged view of a load sensor on a slide track for detecting the delivery of a package to a destination bag.
FIG. 6 is a block diagram of a control system for the sorting conveyor of FIG. 1.
FIG. 7 is a flowchart of the program steps executed by a controller usable with the bagging device of FIG. 1 and the load sensors of FIG. 5 to monitor the sorting operation.
FIG. 8 is an isometric view of another version of a bagging device embodying features of the invention including a motorized rack-and-pinion actuator.
FIG. 9 is an enlarged view of a portion of the bagging device of FIG. 8 with one of the bags removed.
FIG. 10 is an enlarged view of another version of a bagging device as in FIG. 8, but with a different bag retainer.
FIG. 11 is an isometric view of another version of a bagging device as in FIG. 8, but with a rotatable wheeled cart.
FIG. 12 is an enlarged view of an upper portion of the bagging device of FIG. 11
FIGS. 13A and 13B are enlarged views of a locking pin in locked and unlocked positions in the bagging device of FIG. 11.
FIG. 14 is an isometric view of a bagging device as in FIG. 11 mounted on a rotatable platform.
FIG. 15 is an enlarged view of the rotatable platform of FIG. 14.
FIG. 16 is an isometric view of another version of a bagging device embodying features of the invention including collapsible bag sleeves.
FIG. 17 is an exploded view of the upper portion of the bagging device of FIG. 16.
FIG. 18 is an exploded view of the lower portion of the bagging device of FIG. 16.
FIGS. 19A-19C are isometric views of another version of a bagging device embodying features of the invention shown in first, transitional, and second sorting positions.
FIG. 20 is an enlarged isometric view of the slider assembly of FIGS. 19A-19C.
FIGS. 21A-21C are isometric views depicting the sequence of steps taken to remove filled bags from the bagging device of FIGS. 19A-19C.

### DETAILED DESCRIPTION

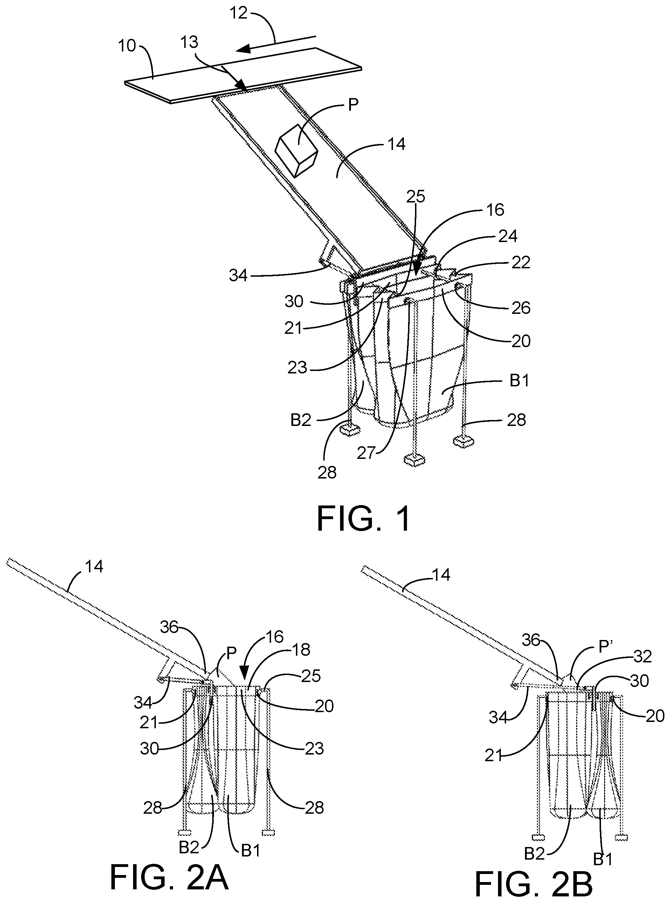

A portion of a sorting system embodying features of the invention is shown in FIG. 1. The sorting system comprises a main sorting conveyor 10, which can be realized as a powered roller conveyor, a shoe sorter, or a conveyor belt advancing packages in a main conveying direction 12. Selected Packages P are sorted off the main sorting conveyor 10 in the direction of arrow 13 onto chutes 14 by conventional diverting mechanisms suitable for use with the kind of sorting conveyor used. Examples of conventional diverting mechanisms include shoes, pushers, cross belts, swivel sorters, and activated roller belts, such as the INTRALOX^{®} Series 7000 activated roller belt manufactured and sold by Intralox, L.L.C. of Harahan, Louisiana, U.S.A.

Packages P assigned a destination in either of the bags B1, B2 are sorted off the main conveyor 10 onto the chute 14. Packages assigned to other destinations along the main sorting conveyor 10 are sorted off onto chutes at those sorting locations and into the assigned bags.

As also shown in FIGS. 2A and 2B, the bags B1, B2 each have a mouth 16 bounded by a lip 18. The lip 18 has two opposing flat sides 20, 21 joined by two pleated sides 22, 23, which make the bags collapsible. The bags B1, B2 are suspended from a pair of slide tracks in the form of rails, or tusks 24, 25, in a bagging device. Eyelets 26, 27 in the flat side 20, 21 of the bag lips 18 slidably receive the tusks 24, 25. The tusks 24, 25 are supported in parallel in a horizontal plane by legs 28 standing up from the floor.

A slider 30 in the bagging device is slidably mounted on the tusks 24, 25 between the lips 18 of the two bags B1, B2. In particular the slider 30 is mounted between the flat side 21 of the first bag B1 and the flat side 20 of the second bag B2. The slider 30 is attached to the arm 32 of an actuator 34, such as a linear actuator, attached at one end at the bottom side of the chute 14. The slider 30 is also attached to the bags B1, B2. The actuator 34 slides the slider 30 along the tusks 24, 25 in a first direction to a first position, shown in FIG. 2A, in which the mouth 16 of the first bag B1 is open and forms an opening into the first bag and in which the mouth of the second bag B2 is closed, and in an opposite second direction to a second position, shown in FIG. 2B, in which the mouth of the second bag is open and forms an opening into the second bag and in which the mouth of the first bag is closed. In FIG. 2A a package P, assigned to the destination bag B1, rides down the chute 14 into the open bag B1. In FIG. 2B a package P' assigned to the destination bag B2, rides down the chute 14 into the open bag B2.

In the first position the slider 30 and the first flat side 21 of the first bag B1 are positioned just below the lower end 36 of the chute 14. In the second position the slider 30 and the lip's flat side 20 of the second bag B2 are positioned outward of the lower end 36 of the chute 14. In both positions the other flat side 20 of the first bag B1 and the other flat side 21 of the second bag B2 remain in position on the tusks 24, 25. In that way the actuator 34 acting on the slider 30 opens one bag while closing the other and positions the mouth of the open bag to receive a package exiting the chute 14.

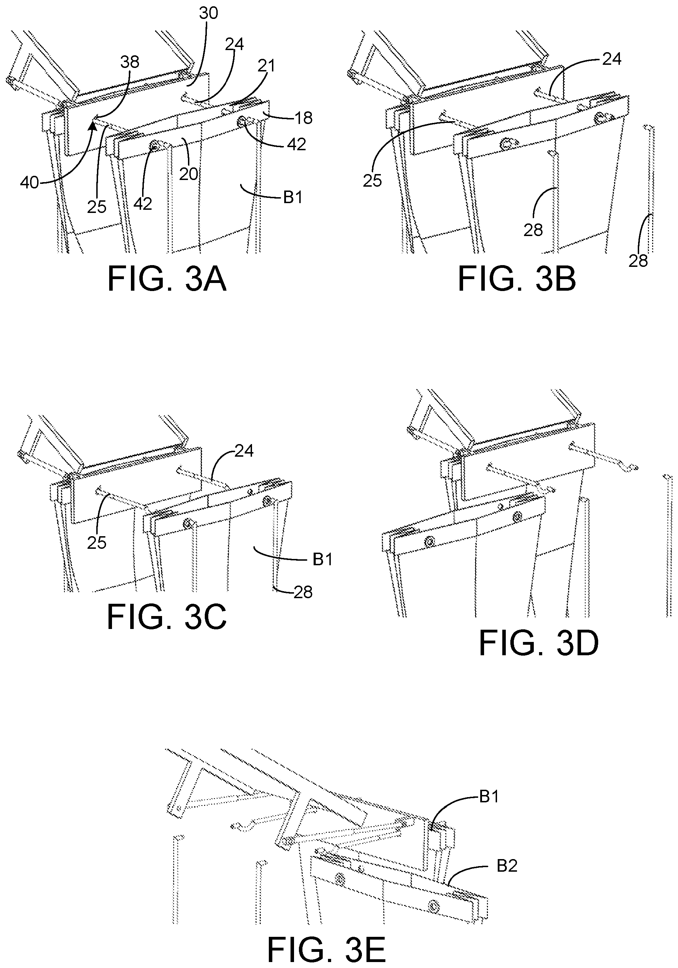

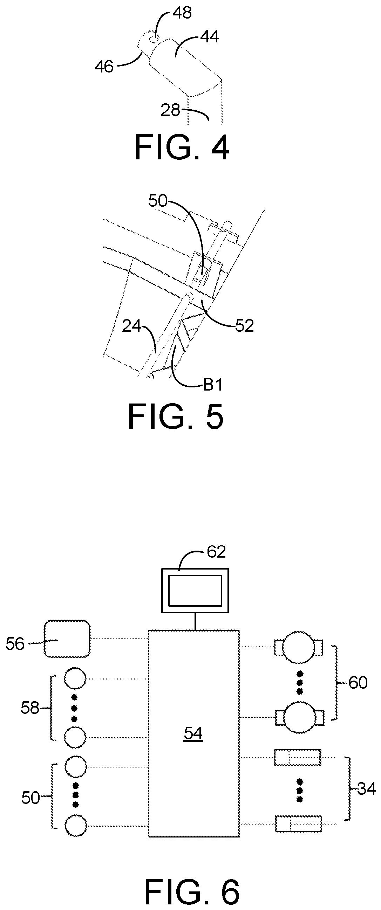

FIGS. 3A-3E depict the sequence of removing bags from the tusks. As shown in FIG. 3A, a bag B1 to be removed is first disconnected from the slider 30. The connection can be formed by hooks 38 on the bag's lip 18 extending through holes 40 in the slider 30, but other connections, such as snaps on the slider and mating snaps on the bags' lips 18, could be used. (FIG. 3A also shows detents 42-dips in the tusks-that serve as retainers loosely retaining the outer flat side 20 of the lip 18 of the first bag B1 in place.) In FIG. 3B, the tusks 24, 25 are pulled from the legs 28 at the outer end of the bag support assembly. As shown in FIG. 4, the top end 44 of each leg 28 has a narrow diameter stub 46 with a ball lock pin 48 that is received in the hollow end of the tusks 24, 25. With the legs 28 supported from the tusks 24, 25, the bag B1 is slid outward along the tusks until it clears their ends as shown in FIG. 3C. Once clear of the tusks 24, 25, the bag B1 can be carried off, as shown in FIG. 3D. The removal of the second bag B2 is accomplished similarly, as shown in FIG. 3E. To replace the bags, the process is reversed.

The sorting conveyor is controlled by a controller 54, such as a programmable logic controller or other processor or programmable computer, as shown in FIG. 6. The controller, executing program steps in its program memory, receives package identifying data from a scanner 56 scanning all the packages. From that data the controller 54 assigns each package to a destination bag. Position sensors 58 along the main sorting conveyor provide position information to the controller 54 that enables each package to be tracked. From weight signals sent to the controller 54 by load sensors 50 at the chutes, the controller detects packages delivered to the bags and confirms correct deliveries, reports missorts (packages sorted to the wrong destination bag), reports undelivered packages, and reports full bags. The controller 54 notifies operators of those operational issues on a monitor 62 or with an indicator light or an audible alarm or other alert. The controller 54 also controls motors 60 that drive the main conveyor and the slider actuators 34 at each chute.

It can happen that a package is sorted to the wrong destination bag. FIG. 5 shows the load sensor 50 mounted to a plate 52 slidably attached at a top end to the tusk 24. The other end of the plate 52 is stationary. When a package lands in the open bag B1, the tusk 24 deflects downward against the load sensor 50, which then reports the increased weight of the bag B1 indicating the reception of a package in one of the bags. The load sensor 50 reports the weight to the sorting-conveyor controller, which interprets weight increases as package detections. And with knowledge of the assigned package destination, the states of the sliders at each chute, and the position of each assigned bag, the controller can determine if the package has been missorted. A load sensor can be attached to each tusk or to only one.

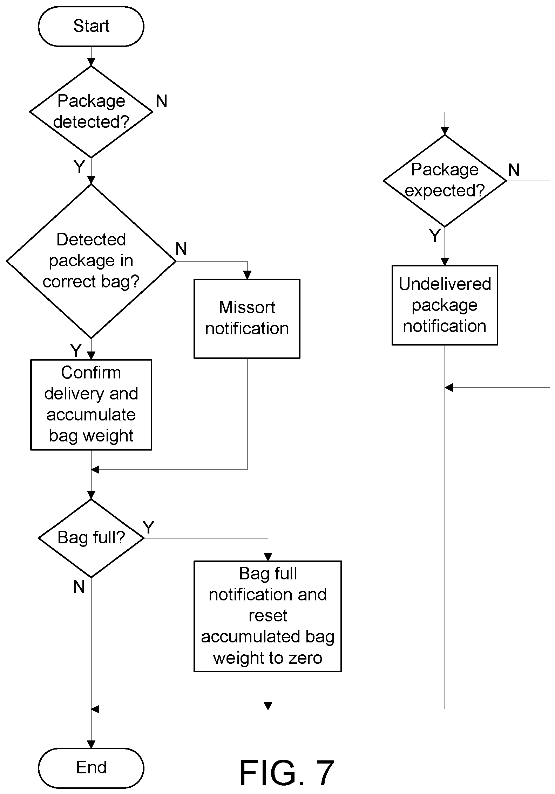

The program steps in program memory executed by the controller to detect and report missorted packages are shown in FIG. 7. The weight signals from the load sensors, which are continuously monitoring the bags, are used by the controller to detect the reception of a package in a bag. When a package is detected, the controller then determines if the package has been missorted, i.e., delivered to the wrong bag, as described in the previous paragraph. If a package is determined to have been delivered to the wrong destination bag, the controller notifies an operator of a bag with a missorted package by means of an indicator light, a message or indication on a display, an alarm, or other alert. Otherwise, the controller confirms the delivery of a package to a correct destination bag and accumulates the bag's weight. In either event the controller then determines if the accumulated weight of the bag exceeds a maximum weight value. If so, the controller notifies the operator that a bag is full so that it can be replaced with an empty bag and the controller then resets the accumulated weight to zero for the replacement bag. If a package was expected to have been delivered, but was not detected by the load sensor at the expected destination bag, the controller notifies the operator that a package was not delivered. If no package is detected and delivered and none was expected, the controller sends no alerts.

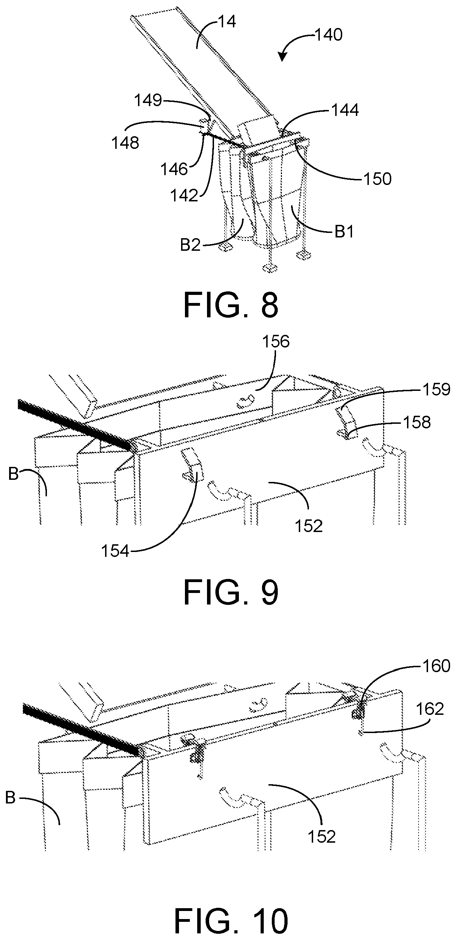

Another version of a bagging device is shown in FIG. 8. The bagging device 140 differs from the bagging device of FIG. 1 in that a motorized rack-and-pinion actuator is used instead of a linear actuator. The rack-and-pinion actuator comprises a rack gear 142 attached at one end to the slider 144. A pinion gear 146 on the shaft of a motor 148 engages the rack gear 142. Rotation of the motor's shaft and the pinion gear 146 translates the rack gear 142 and the slider 144 along its slide track 150 to open and close the openings into the bags B1, B2. A similar motorized rack-and-pinion actuator could be attached to the other side of the slider 144. The motor 148 is supported by a motor mount 149 suspended from the chute 14, for example.

Alternative means for removably attaching the bags B to a slider 152 are shown in FIGS. 9 and 10. In FIG. 9 spring gates 154 spaced apart laterally on both faces of the slider 152 are used instead of the hooks shown in FIG. 3A to attach the bags' lips 156 to the slider. The spring gates 154 have a lower pivot end 158 and an upper free end 159 that is biased against the slider 152 by a spring. The gates 154 extend through the eyelets on the bags' lips 156. The spring gates 154 open easily under slight outward pressure for bag installation and removal. Instead of spring gates, spring latches 160 through the bags' eyelets are used to releasably attach the bags B to the slider 152 in FIG. 10. Hooks 162 depending from the spring latches 160 hook the bags' eyelets to retain the bags B.

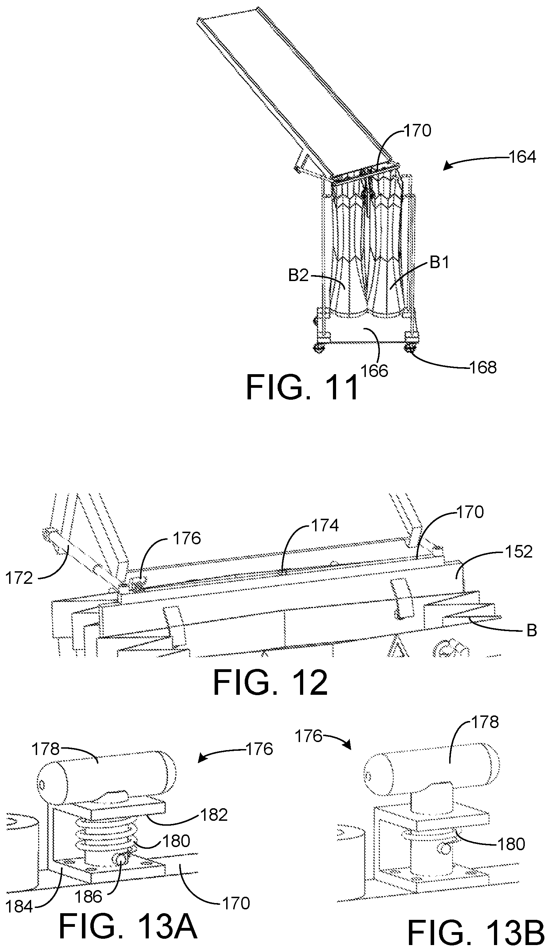

FIG. 11 shows a bagging device 164 with a wheeled platform 166 that allows the resulting bag cart to rotate for easy bag insertion and removal. The platform 166 has caster wheels 168 at each corner.

As shown in FIG. 12, a locking bar 170, to which the actuators 172 are attached at each end, sits atop the slider 152. A bolt 174 has an unthreaded shank between the bolt head and an opposite threaded end. The bolt 174 extends through an unthreaded through hole in the top center of the locking bar 170 and is screwed into a threaded hole in the top center of the slider 152. In that way the slider 152, the bolt 174, and the bags B1, B2 can be rotated on the caster wheels 168 relative to the locking bar 170, as shown in FIG. 11, for easy bag replacement.

A locking pin 176 extends through a hole in the locking bar 170 and into an aligned hole in the top of the slider 152 to prevent rotation of the slider relative to the locking bar during normal operation of the bagging device. When a bag B has to be replaced, an operator lifts the locking pin 176 by its handle 178 from the locked position shown in FIG. 13A to the unlocked position shown in FIG. 13B. A spring 180 coiled around a drawbar portion of the locking pin 176 between a spring seat 182 formed on the bottom face of a U-shaped pin support 184 fastened to the top of the locking bar 170 and a spring-retainer stub 186 biases the locking pin into its locked position in FIG. 13A. To unlock the slider 152 from the locking bar 170, the operator pulls the handle 178 upward against the spring pressure to lift the end of the locking pin 176 from the hole in the slider so that the bagging device can be rotated for access to the bags.

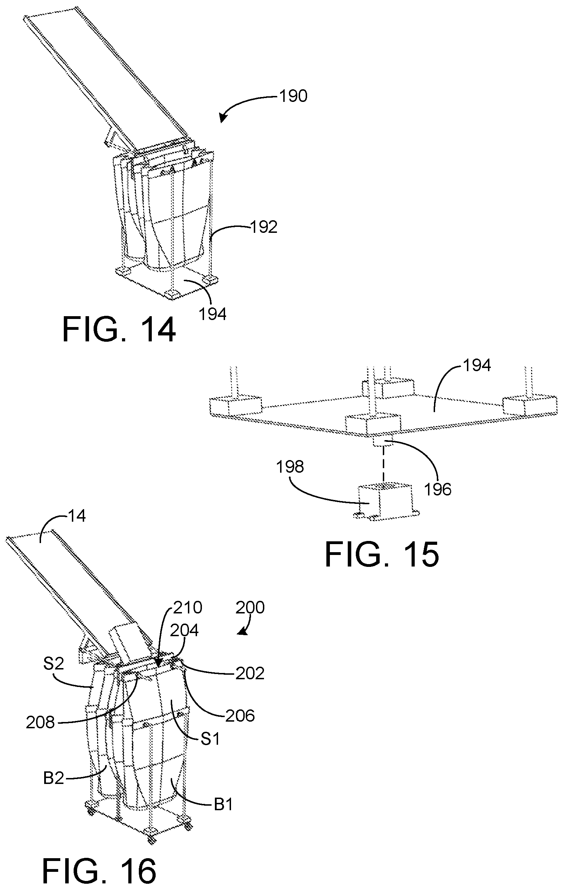

Instead of a rotatable bagging device with caster wheels as in FIG. 11, the bagging device 190 of FIG. 14 is wheelless. Its legs 192 are mounted to a lower platform 194 that has a pivot pin 196 extending down centrally from its bottom side as shown in FIG. 15. The pivot pin 196 is received in a bearing block 198 mounted to the floor. The bearing block 198 supports the bagging device 190 and allows it to be rotated for bag replacement.

Another version of a bagging device 200 is shown in FIG. 16. One difference from the previously described bagging devices is that sleeves S1, S2 are interposed between the chute 14 and the bags B1, B2. The upper lips 202 of the sleeves are attached to a slider 204 and to slide tracks 206 through eyelets 208. The sleeves S1, S2 extend downward from their lips 202 and into the mouths of the bags B1, B2. The mouths of the bags B1, B2 can remain permanently open, while the mouths 210 of the sleeves S1, S2 serve as collapsible openings into the bags.

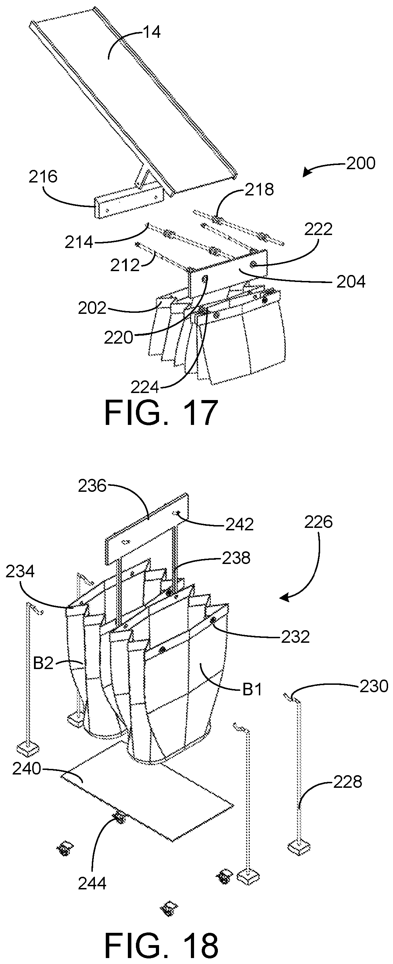

As shown in FIG. 17, the slider 204 is attached to actuators 212, which move the slider and the upper lips 202 of the sleeves S1, S2, along two rod-like rails 214 forming slide tracks. The rails 214 are attached at the end to a rail support 216 mounted to the bottom of the chute 14. The rails 214 are also supported by the slider 204 and its attachment to the actuators 212. Sleeve stops 218 in the form of pairs of rings spaced apart along the length of the rails 212 define a translation range for the sleeves S1, S2, along the rails, between each pair. And the outer lips of the sleeves S1, S2 are retained between the stops 218 of each pair of rings, which serve as sleeve retainers. Ring magnets 220 around the eyelets 222 in the slider 204 attract ferrous metal rings 224 surrounding the eyelets in the sleeves' lips 202 to hold the sleeves S1, S2 to the slider. As the slider 204 is moved back and forth on the slide tracks 214, it opens one sleeve, while closing the other so that packages dropped in the open sleeve are deposited in the associated bag.

The bags B1, B2 are supported in a bag stand 226 as shown in FIG. 18. The bag stand 226 has four legs 228 each with a hook 230 at the top. The bags B1, B2 are suspended at their outer sides from the hooks 230 received in eyelets 232 in the bags' lips 234. A central bag support stand 236 has legs 238 mounted to a lower platform 240. The bag support stand 236 has hooks 242 on each face to which the inner lips of the bags B1, B2 are hooked through eyelets. Caster wheels 244 may be attached to the bottom of the platform 240 to allow the bag stand to be moved easily.

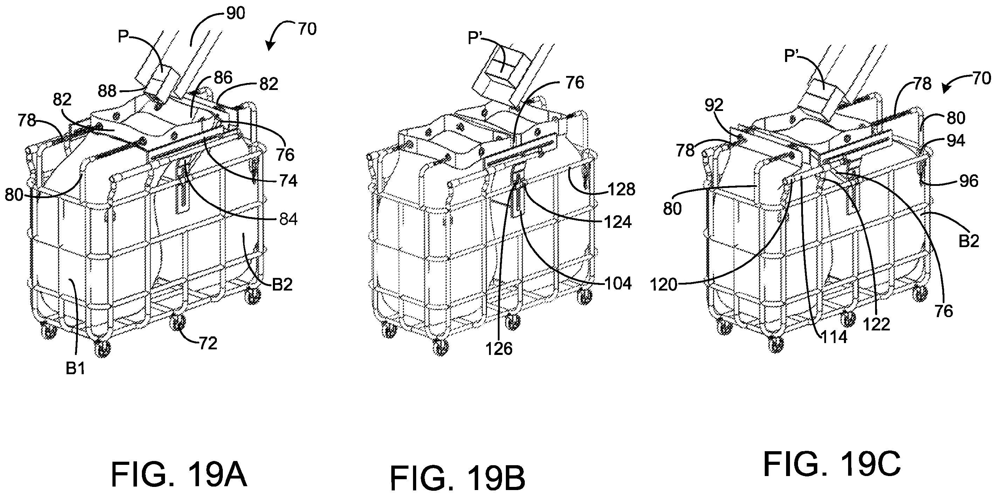

Another version of a bagging device for depositing packages in bags is shown in FIG. 19A. The bagging device comprises a bag support assembly 74 and a cart 70 constructed of tubular members. The cart 70 has caster wheels 72 at the bottom in contact with the floor. At the upper end of the cart 70 is the bag support assembly 74 supporting two bags B1, B2 on opposite sides of a slider 76. The bag support assembly 74 comprises the slider 76, coil springs 78 attached at one end to posts 80 at the top of the cart 70 and at the other end to the outer sides of lips 82 lining the tops of the bags B1, B2, and a slide actuator assembly 84 that selectively moves the slider to open and close the bags.

FIGS. 19A-19C illustrate the sequence of depositing a first package P in the first bag B1 and then a second package P' in the second bag B2. In FIG. 19A the slider 76 is shown in a first position at an end of its range of translation closing the second bag B2 and opening the mouth of the first bag B1 so that the inner side 86 of the first bag's lip 82 is under the lower end 88 of a chute 90 to receive the package P. FIG. 19B shows the slider 76 in a transition position as it slides to a second position to close the first bag B1 and to open the second bag B2 to receive a package P' from the chute 90 as shown in FIG. 19C. The coil springs 78 attached to the posts 80 at one end are attached to the outer sides of the lips 82 of the bags B1, B2 at the other end by hooks 98 through eyelets 92 in the lips. The springs 78 apply forces that bias the outer sides of the bags B1, B2 away from the slider 76, which helps keep the bags open during a package deposit. Hooks 94 on the cart 70 hook onto rings 96 attached to the sides of the bags B1, B2 to provide the main support for the bags.

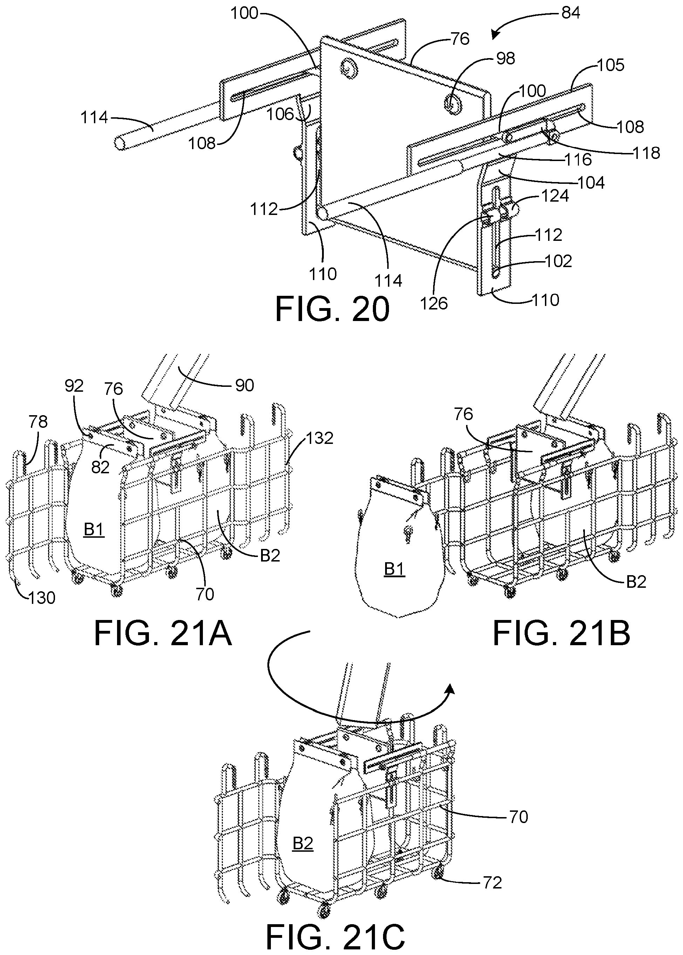

Details of the slider 76 and the slide actuator assembly 84 are shown in FIG. 20. The slider 76 is a plate with a pair of hooks 98 on each face of the plate for hooking into the bag's eyelets so that the inner lips of the bags move with the slider plate. Upper and lower stubs 100, 102 protrude laterally outward from opposite sides of the slider 76. T-shaped guides 104, 106 bracket the slider 76. The crossbars 105 of the guides 104, 106 have horizontal slots 108 in which the upper stubs 100 are received. The horizontal slots 100 in the crossbars 105 form slide tracks defining a translation range for the top end of the slider plate 76. The posts 110 of the T-shaped guides 104, 106 have vertical slots 112 that receive the lower stubs 102 of the slider 76 and give the slider the freedom of movement to tilt as the plate translates along the horizontal slots 108. Linear actuators 114 have extension arms 116 attached to the upper stubs 100 by couplings 118.

As shown in FIG. 19C, the actuators 114 are attached to the cart 70 by retaining rings 120 at the tops of outwardly bent upstanding tubular members 122. In FIG. 19A the actuators' arms 116 are shown extended to open the mouth of the first bag B1 and close the mouth of the second bag B2. In FIG. 19C the actuators' arms 116 are shown retracted to open the second bag B2 and close the first bag B1. As seen in FIGS. 19B and 20, retaining rings 124, 126 on the outer sides of the T-shaped guides 104 attached to horizontal members 128 of the cart 70 hold the guides in place.

FIGS. 21A-21C show how the bags B1, B2 are removed from the cart 70. First, the coil springs 78 are unhooked from the eyelets 92 in the bags' lips 82. Then end gates 130, 132 attached to the carts' side frame at hinges are swung open as shown in FIG. 21A. Next, the first bag B1, which is outward of the chute 90, is unhooked from the slider plate 76 and removed through the open gateway in the end of the cart 70, as shown in FIG. 21B. As shown in FIG. 21C, the cart 70 is then rotated 180° or as far as necessary to access the second bag B2 and remove it through the other open end. Replacement bags are installed in the cart by performing the removal steps in reverse.

Although the invention has been described with respect to a few exemplary versions, other versions are possible. For example, the actuators in any of the versions can be realized as linear actuators, such as pneumatic, hydraulic, or electromagnetic actuators, as rack-and-pinion actuators, or by other equivalent devices capable of translating a slider along slide tracks. As another example, the various bagging devices could attach the bags or sleeves to the slides by hooks, spring gates, spring latches, magnetic attraction, or any attachment making bag replacement easy. And the term "package" is meant to generically refer to any conveyable objects, such as envelopes, cartons, boxes, and parcels, for example. And other features shown in some of the bagging devices are usable in others of the bagging devices. So, as these few examples suggest, the scope of the claims is not meant to be limited to the exemplary versions disclosed in detail.

## Claims

1. A bagging device (140; 164; 190; 200) comprising:
a pair of slide tracks (24, 25; 206; 214)
a slider (30; 144; 152; 204) movable along the slide tracks and configured to be attachable to two bags (B1, B2)
an actuator (34; 172; 212) coupled to the slider and configured to slide the slider along the slide tracks in a first direction opening an opening into a first one of the bags (B1) and closing an opening into a second one of the bags (B2) and in an opposite second direction opening the opening into the second one of the bags (B2) and closing the opening into the first one of the bags (B1),
**characterised in that** the slide tracks (30; 144; 152; 204) comprise first and second rails (24, 25) extending through the slider and adapted to extend through the lips (18) of the bags (B1, B2).

2. The bagging device of claim 1 wherein the slider (76) has stubs (100,102) protruding from its laterally opposite sides and wherein the slide tracks comprise first and second guides having slots receiving the stubs.

3. The bagging device of claim 2 comprising springs (78) attached to the bags to bias one side of their openings away from the slider (76).

4. The bagging device of claim 1 wherein the first and second rails (24, 25) each have first and second detents (42) at spaced positions along the length of the rail to retain the sides of the bags opposite the slider.

5. The bagging device of claim 1 comprising a leg (28) attached at each end of the first and second rails to support the rails in parallel, wherein the legs are detachable to slide a bag on or off the first and second rails.

6. The bagging device of claim 1 wherein the slider (30) is attachable to bags by means of hooks, spring gates, spring latches, or magnetic attraction.

7. The bagging device of claim 1 comprising a locking bar (170) atop the slider (152) and a pivot pin extending through the locking bar and affixed to the slider to allow the slider (152) to rotate relative to the locking bar (170).

8. The bagging device of claim 7 comprising a locking pin (176) affixed to the locking bar (170) and extendable into the slider (152) into a locked position to prevent the slider from rotating relative to the locking bar and retractable from the locking bar into an unlocked position to allow the slider to be rotated relative to the locking bar.

9. The bagging device of claim 1 comprising sleeves (S1, S2) attached to the slider (204) and forming openings into the bags.

10. A sorting system for sorting packages comprising:
first and second destination bags (B1, B2), each having an opening;
a bagging device (140; 164; 190; 200) as in any of claims 1-9 wherein the actuator (34; 172; 212) is configured to slide the slider (30; 144; 152; 204) along the slide tracks in the first direction opening the opening into the first destination bag (B1) and closing the opening into the second destination bag (B2) and in the opposite second direction opening the opening into the second destination bag (B2) and closing the opening into the first destination bag (B1).

11. The sorting system of claim 10 wherein the slider extends in width from a first end to a second end and in thickness from a first side adjacent the first destination bag to a second side adjacent the second destination bag and wherein the actuator includes first and second linear actuators (114) having arms with distal ends attached to the second side of the slider at the first and second ends.

12. The sorting system of claim 10 comprising a chute (14) declining from an upper end to a lower end positioned to drop packages through the openings into the first and second destination bags (B1, B2).

13. The sorting system of claim 10 comprising a load sensor (50) mounted to the first or second slide track to detect the deposit of a package in the first or second destination bag and a controller, wherein:
the controller assigns each package to one of the first and second destination bags and receives signals from the load sensor indicating the delivery of a package to the first or second destination bag, wherein the controller notifies an operator if the package was missorted; or
the controller receives signals from the load sensor indicating the weight of each package delivered to the first or second destination bags, accumulates the total weights of the first or second destination bags, compares the accumulated weights to a maximum weight value, and notifies an operator that a destination bag is full if the accumulated weight exceeds the maximum weight value.

14. The sorting system of claim 10 comprising first and second sleeves (S1, S2) attached to the slider and extending into the first and second destination bags to form the openings into the first and second destination bags (B1, B2) and a bag support stand (236) between the first and second destination bags (B1, B2) and below the slider supporting the first and second destination bags.

## Patentansprüche

1. Vorrichtung (140; 164; 190; 200) zum Einpacken in Beutel, umfassend:
Ein Paar Gleitschienen (24, 25; 206; 214);
einen Schieber (30; 144; 152; 204), der entlang der Gleitschienen beweglich und so konfiguriert ist, dass er an zwei Beutel (B1, B2) befestigt werden kann;
einen mit dem Schieber gekoppelten Aktuator (34; 172; 212), der dazu konfiguriert ist, den Schieber entlang der Gleitschienen in einer ersten Richtung zu verschieben, die eine Öffnung zu einem ersten der Beutel (B1) öffnet und das Schließen einer Öffnung in einen zweiten der Beutel (B2) und in eine entgegengesetzte zweite Richtung umfasst, wodurch sich die Öffnung in den zweiten der Beutel (B2) öffnet und die Öffnung in den ersten der Beutel (B1) verschließt,
**dadurch gekennzeichnet, dass** die Gleitschienen (30; 144; 152; 204) erste und zweite Schienen (24, 25) umfassen, die sich durch den Schieber erstrecken, und angepasst sind, sich durch die Lippen (18) der Beutel (B1, B2) zu erstrecken.

2. Vorrichtung zum Einpacken in Beutel nach Anspruch 1, wobei der Schieber (76) Vorsprünge (100,102) aufweist, die von seinen seitlich gegenüberliegenden Seiten abstehen und wobei die Gleitschienen erste und zweite Führungen mit Schlitzen umfassen, welche die Vorsprünge aufnehmen.

3. Vorrichtung zum Einpacken in Beutel nach Anspruch 2, die Federn (78), die an den Beuteln befestigt sind, um eine Seite ihrer Öffnungen vom Schieber (76) weg zu versetzen.

4. Vorrichtung zum Einpacken in Beutel nach Anspruch 1, wobei die ersten und zweiten Schienen (24, 25) jeweils erste und zweite Rastungen (42) an in Längsrichtung der Schiene beabstandeten Positionen aufweisen, um die dem Schieber gegenüberliegenden Seiten der Beutel zu halten.

5. Vorrichtung zum Einpacken in Beutel nach Anspruch 1, die einen an jedem Ende der ersten und zweiten Schienen angebrachten Schenkel (28) zum parallelen Abstützen der Schienen umfasst, wobei die Schenkel abnehmbar sind, um einen Beutel auf die ersten und zweiten Schienen aufzuschieben oder von diesen abzuziehen.

6. Vorrichtung zum Einpacken in Beutel nach Anspruch 1, wobei sich der Schieber (30) mittels Haken, Federverschlüssen, Schnappverschlüssen oder magnetischer Anziehung an Beuteln befestigen lässt.

7. Vorrichtung zum Einpacken in Beutel nach Anspruch 1, die eine Verriegelungsstange (170) auf dem Schieber (152) und einen Schwenkstift umfasst, der sich durch die Verriegelungsstange erstreckt und am Schieber befestigt ist, um eine Drehung des Schiebers (152) relativ zur Verriegelungsstange (170) zu ermöglichen.

8. Vorrichtung zum Einpacken in Beutel nach Anspruch 7, die einen Verriegelungsstift (176) umfasst, der an der Verriegelungsstange (170) befestigt ist und in den Schieber (152) in eine verriegelte Position ausfahrbar ist, um zu verhindern, dass sich der Schieber relativ zur Verriegelungsstange dreht und von der Verriegelungsstange in eine entriegelte Position zurückziehbar ist, um eine Drehung des Schiebers relativ zur Verriegelungsstange zu ermöglichen.

9. Vorrichtung zum Einpacken in Beutel nach Anspruch 1, die am Schieber (204) befestigte Hülsen (S1, S2) umfassen, die Öffnungen in die Beutel bilden.

10. Sortiersystem zum Sortieren von Paketen, umfassend:
Erste und zweite Zielbeutel (B1, B2), die jeweils eine Öffnung aufweisen;
eine Vorrichtung (140; 164; 190; 200) zum Einpacken in Beutel nach einem der Ansprüche 1-9, wobei der Aktuator (34; 172; 212) dazu konfiguriert ist, den Schieber (30; 144; 152; 204) entlang der Gleitschienen in der ersten Richtung zu verschieben, wodurch die Öffnung zum ersten Zielbeutel (B1) geöffnet wird und die Öffnung zum zweiten Zielbeutel (B2) geschlossen wird und in der entgegengesetzten zweiten Richtung zu verschieben, wodurch die Öffnung zum zweiten Zielbeutel (B2) geöffnet und die Öffnung zum ersten Zielbeutel (B1) geschlossen wird.

11. Sortiersystem nach Anspruch 10, wobei sich der Schieber in der Breite von einem ersten Ende zu einem zweiten Ende und in der Dicke von einer ersten Seite, die an den ersten Zielbeutel angrenzt zu einer zweiten Seite erstreckt, die an den zweiten Zielbeutel angrenzt, wobei der Aktuator erste und zweite Linearaktuatoren (114) umfasst, die Arme mit distalen Enden aufweisen, welche an der zweiten Seite des Schiebers am ersten bzw. zweiten Ende befestigt sind.

12. Sortiersystem nach Anspruch 10, welches eine von einem oberen Ende zu einem unteren Ende abfallende Rutsche (14) umfasst, die so positioniert ist, dass sie Pakete durch die Öffnungen in die ersten und zweiten Zielbeutel (B1, B2) fallen lässt.

13. Sortiersystem mach Anspruch 10, das einen an der ersten oder zweiten Gleitschiene angebrachten Lastsensor (50) zum Erfassen des Ablegens eines Pakets in den ersten oder zweiten Zielbeutel und eine Steuereinheit umfasst, wobei:
Die Steuereinheit jedes Paket einem der ersten und zweiten Zielbeutel zuordnet und Signale vom Lastsensor empfängt, welche die Zustellung eines Pakets an den ersten oder zweiten Zielbeutel anzeigen, wobei die Steuereinheit eine Bedienperson benachrichtigt, falls das Paket falsch sortiert wurde; oder
die Steuereinheit empfängt Signale vom Lastsensor, die das Gewicht jedes in die ersten und zweiten Zielbeutel abgegebenen Pakets anzeigen, summiert die Gesamtgewichte der ersten und zweiten Zielbeutel, vergleicht die summierten Gewichte mit einem Höchstgewichtswert und benachrichtigt eine Bedienperson darüber, dass ein Zielbeutel voll ist, wenn das summierte Gewicht den Höchstgewichtswert überschreitet.

14. Sortiersystem nach Anspruch 10, welches erste und zweite Hülsen (S1, S2) umfasst, die am Schieber angebracht sind und sich in die ersten und zweiten Zielbeutel erstrecken, um die Öffnungen zu den ersten und zweiten Zielbeuteln (B1, B2) zu bilden und ein Stützgestell (236) für Beutel zwischen den ersten und zweiten Zielbeuteln (B1, B2) und unterhalb des Schiebers umfassen, welches die ersten und zweiten Zielbeutel abstützt.

## Revendications

1. Dispositif d'ensachage (140 ; 164 ; 190 ; 200), comprenant :
une paire de pistes de coulissement (24, 25 ; 206 ; 214) ;
un coulisseau (30 ; 144 ; 152 ; 204) mobile le long des pistes de coulissement et configuré pour pouvoir être attaché à deux sacs (B1, B2) ;
un actionneur (34 ; 172 ; 212) accouplé au coulisseau et configuré pour faire coulisser le coulisseau le long des pistes de coulissement dans une première direction ouvrant une ouverture dans un premier des sacs (B1) et fermant une ouverture dans un second des sacs (B2) et dans une seconde direction opposée ouvrant l'ouverture dans le second des sacs (B2) et fermant l'ouverture dans le premier des sacs (B1),
le dispositif d'ensachage étant **caractérisé en ce que** les pistes de coulissement (30 ; 144 ; 152 ; 204) comprennent des premier et second rails (24, 25) s'étendant à travers le coulisseau et conçues pour s'étendre à travers les lèvres (18) des sacs (B1, B2).

2. Dispositif d'ensachage selon la revendication 1, le coulisseau (76) comportant des ergots (100, 102) faisant saillie depuis ses côtés latéralement opposés et les pistes de coulissement comprenant des premier et second guides comportant des fentes recevant les ergots.

3. Dispositif d'ensachage selon la revendication 2, comprenant des ressorts (78) attachés aux sacs pour solliciter un côté de leurs ouvertures à l'écart du coulisseau (76).

4. Dispositif d'ensachage selon la revendication 1, les premier et second rails (24, 25) comportant chacun des premier et second crans d'arrêt (42) au niveau de positions espacées sur la longueur du rail pour retenir les côtés des sacs opposés au coulisseau.

5. Dispositif d'ensachage selon la revendication 1, comprenant un pied (28) attaché à chaque extrémité des premier et second rails pour supporter les rails en parallèle, les pieds étant amovibles pour faire coulisser un sac sur les premier et second rails ou hors de ceux-ci.

6. Dispositif d'ensachage selon la revendication 1, le coulisseau (30) pouvant être attaché à des sacs au moyen de crochets, de clapets à ressort, de verrous à ressort ou par attraction magnétique.

7. Dispositif d'ensachage selon la revendication 1, comprenant une barre de verrouillage (170) au-dessus du coulisseau (152) et un axe de pivotement s'étendant à travers la barre de verrouillage et fixé au coulisseau pour permettre au coulisseau (152) de tourner par rapport à la barre de verrouillage (170).

8. Dispositif d'ensachage selon la revendication 7, comprenant une goupille de verrouillage (176) fixée à la barre de verrouillage (170) et pouvant s'étendre dans le coulisseau (152) dans une position verrouillée pour empêcher le coulisseau de tourner par rapport à la barre de verrouillage et pouvant se rétracter depuis la barre de verrouillage dans une position déverrouillée pour permettre au coulisseau de tourner par rapport à la barre de verrouillage.

9. Dispositif d'ensachage selon la revendication 1, comprenant des manchons (S1, S2) attachés au coulisseau (204) et formant des ouvertures dans les sacs.

10. Système de tri pour trier des paquets, comprenant :
des premier et second sacs de destination (B1, B2), comportant chacun une ouverture ;
un dispositif d'ensachage (140 ; 164 ; 190 ; 200) selon l'une quelconque des revendications 1 à 9, l'actionneur (34 ; 172 ; 212) étant configuré pour faire coulisser le coulisseau (30 ; 144 ; 152 ; 204) le long des pistes de coulissement dans la première direction ouvrant l'ouverture dans le premier sac de destination (B1) et fermant l'ouverture dans le second sac de destination (B2) et dans la seconde direction opposée ouvrant l'ouverture dans le second sac de destination (B2) et fermant l'ouverture dans le premier sac de destination (B1).

11. Système de tri selon la revendication 10, le coulisseau s'étendant en largeur depuis une première extrémité jusqu'à une seconde extrémité et en épaisseur depuis un premier côté adjacent au premier sac de destination jusqu'à un second côté adjacent au second sac de destination, et l'actionneur comprenant des premier et second actionneurs linéaires (114) comportant des bras dotés d'extrémités distales attachées au second côté du coulisseau au niveau des première et seconde extrémités.

12. Système de tri selon la revendication 10, comprenant une goulotte (14) inclinée vers le bas depuis une extrémité supérieure jusqu'à une extrémité inférieure positionnée pour laisser tomber des paquets à travers les ouvertures dans les premier et second sacs de destination (B1, B2).

13. Système de tri selon la revendication 10, comprenant un capteur de charge (50) monté sur la première ou la seconde piste de coulissement pour détecter le dépôt d'un paquet dans le premier ou le second sac de destination et un dispositif de commande,
le dispositif de commande attribuant chaque paquet à un sac parmi les premier et second sacs de destination et recevant en provenance du capteur de charge des signaux indiquant la distribution d'un paquet au premier ou au second sac de destination, le dispositif de commande notifiant à un opérateur si le paquet a fait l'objet d'un tri erroné ; ou
le dispositif de commande recevant en provenance du capteur de charge des signaux indiquant le poids de chaque paquet distribué au premier ou au second sac de destination, cumulant les poids totaux du premier ou du second sac de destination, comparant les poids cumulés à une valeur de poids maximale, et notifiant à un opérateur qu'un sac de destination est plein si le poids cumulé dépasse la valeur de poids maximale.

14. Système de tri selon la revendication 10, comprenant des premier et second manchons (S1, S2) attachés au coulisseau et s'étendant dans les premier et second sacs de destination pour former les ouvertures dans les premier et second sacs de destination (B1, B2), et un support de sac (236) entre les premier et second sacs de destination (B1, B2) et au-dessous du coulisseau supportant les premier et second sacs de destination.
